# EUROPÄISCHE PATENTSCHRIFT

(11) **EP 3 368 384 B1**
(45) Veröffentlichungstag und Bekanntmachung des Hinweises auf die Patenterteilung: **08.01.2020**
(21) Anmeldenummer: 16797759.4
(22) Anmeldetag: 26.10.2016
(51) Int. Cl.: B60S 3/04, B08B 1/04

(54) **VORRICHTUNG ZUR REINIGUNG VON OBJEKTEN, INSBESONDERE ZWEIRÄDERN**
APPARATUS FOR CLEANING OBJECTS, IN PARTICULAR TWO-WHEEL VEHICLES
DISPOSITIF SERVANT À NETTOYER DES OBJETS, EN PARTICULIER DES DEUX-ROUES

(30) Priorität: 28.10.2015 DE 102015118371; 16.04.2016 DE 102016102020; 22.06.2016 DE 102016111486
(43) Veröffentlichungstag der Anmeldung: 05.09.2018
(73) Patentinhaber: Kumar, Sachin, 50668 Cologne (DE)
(72) Erfinder: Kumar, Sachin, 50668 Cologne (DE)
(74) Vertreter: Freischem & Partner Patentanwälte mbB
(86) Internationale Anmeldenummer: PCT/EP2016/075785
(87) Internationale Veröffentlichungsnummer: WO 2017/072167

(56) Entgegenhaltungen:
- EP-A1- 0 222 861
- CN-Y- 2 866 268
- DE-U1- 9 208 442
- FR-A1- 2 976 539

## Beschreibung

Die vorliegende Erfindung betrifft eine Vorrichtung gemäß dem Oberbegriff des Hauptanspruchs. Die FR 2976 539 offenbart eine solche Vorrichtung.

Mit einem vermehrten Aufkommen von insbesondere hochwertigen Zweirädern steigt der Wunsch nach einem gepflegten Zustand. Ebenso haben Fahrradverleihfirmen bei einem großen Fuhrpark und dessen Einsatz im extremen Gelände großes Interesse an einer Reinigung. Freizeitradfahrer legen vermehrt Wert auf ein gepflegtes Erscheinungsbild deren Zweiräder.

Die DE 43 25 973 C1 offenbart eine Vorrichtung zum Reinigen eines Zweirades, insbesondere eines Fahrrades, mit einer das Zweirad mindestens seitlich und oberhalb umschließenden Kabine, in der eine eine Sprüh- und/oder Trocknungseinrichtung beinhaltende Reinigungseinrichtung angeordnet ist, wobei die Reinigungseinrichtung wenigstens zwei beidseitig des Zweirades positionierte, rotierbare bürstenartige Reinigungswalzen mit den Reinigungswalzen zugeordneten Sprüh- und/oder Trocknungseinrichtungen umfaßt, die gemeinsam mittels eines auf einer parallel zur Zweiradlängsachse verlaufenden Längsschiene bewegbaren Schlittens seitlich entlang des Zweirades verfahrbar sind.

Eine derartige Vorrichtung ist aufgrund der hohen Materialkosten sehr teuer. Beispielsweise sind die Reinigungswalzen sehr groß und können lediglich horizontal am Fahrrad vorbeigeführt werden. Entsprechend ist ebenso ein Verbrauch an Wasser, Reinigungsmitteln und Konservierungsmitteln hoch.

Es ist Aufgabe der Erfindung eine Vorrichtung und ein Verfahren zur Reinigung von Objekten, insbesondere Zweirädern, insbesondere von Fahrrädern, derart bereit zu stellen, dass ein Zweirad einfach, kostengünstig und wirksam gereinigt wird. Damit soll entsprechend zeitlich aufeinanderfolgend eine Vielzahl von Zweirädern gereinigt werden können. Eine Vorrichtung soll insbesondere materialsparend herstellbar sein, eine geringe Masse aufweisen, einfach transportierbar sein und eine lange Lebensdauer aufweisen. Eine Verwendung der Vorrichtung soll einfach und zuverlässig sein. Insbesondere soll ein Verbrauch an Energie und Reinigungsmedien im Verhältnis zu einer Reinigungswirkung klein sein. Es soll Schmutz und ein Reinigungsmedium innerhalb der Vorrichtung gehalten werden. Es soll die Reinigungswirkung vergrößert und ein Verlust an Reinigungsmedium verkleinert werden.

Die Aufgabe wird durch eine Vorrichtung mit den Merkmalen gemäß dem Hauptanspruch gelöst.

Gemäß der Erfindung wird eine Vorrichtung zum Reinigen eines Objektes, insbesondere eines Zweirades, vorgeschlagen, wobei ein eine Reinigungseinrichtung beinhaltendes Gehäuse mit einer offenen Seite geschaffen ist, an der das Objekt und das Gehäuse zueinander positionierbar sind und aus der die Reinigungseinrichtung auf das Objekt einwirkend bereitstellbar ist, wobei die Reinigungseinrichtung eine Steuerungseinrichtung zum Steuern der Reinigungseinrichtung aufweist.

Ein Zweirad erstreckt sich insbesondere mit den beiden Rädern und einem Rahmen entlang einer Längsrichtung. Eine Zweiradlängsachse ist insbesondere eine Symmetrieachse des Zweirades und verläuft bei einem geradeaus orientierten Lenker des Zweirades entlang den beiden Rädern und dem Rahmen.

Gemäß einem weiteren Aspekt wird eine Verwendung zweier erfindungsgemäßer Vorrichtungen vorgeschlagen, wobei die zwei Vorrichtungen entlang einer Längsrichtung nebeneinander positioniert werden, wobei die offene Seite der ersten Vorrichtung der offenen Seite der zweiten Vorrichtung gegenüberliegend zugewandt ist. Das Zweirad kann in einer derartigen Anordnung in einem Durchlauf ohne zu Wenden von beiden Seiten gereinigt werden, wodurch Zeit und Kosten gespart werden können.

Damit verringert sich der Materialverbrauch zur Herstellung der Vorrichtung und dessen Komplexität gegenüber dem Stand der Technik. Während des Betriebes werden wenig Wasser, Reinigungs- und Konservierungsmittel benötigt. Das Zweirad, kann gezielt an verschmutzten Stellen gereinigt, getrocknet und konserviert werden. Ein Energieverbrauch zur Bewegung der Reinigungseinrichtung wird wirksam verringert.

Gemäß der Erfindung weist die Reinigungseinrichtung zwei mittels Elektromotor(en) rotierbare bürstenartige Reinigungswalzen auf. Die Elektromotoren können innerhalb der Reinigungswalzen angeordnet sein.

Gemäß einer weiteren vorteilhaften Ausgestaltung können die Reinigungswalzen mit einem Trommelmotor mittels Madenschrauben drehfest verbunden sein. Insbesondere können die Reinigungswalzen über ein Plastiklager gelagert sein, wobei in dem Plastiklager Wasserkanäle für das Abwasser vorgesehen sein können, sodass kein Wasser in das Lager gelangen kann, und somit ein Schmieren des Lagers mit Schmierfett und/oder Schmieröl vermieden werden kann.

Gemäß einer weiteren vorteilhaften Ausgestaltung können die Reinigungswalzen an dem Gehäuse drehbar gelagert sein. Insbesondere sind die Reinigungswalzen derart starr festgelegt, dass keine Bewegung der Reinigungswalzen in Hochrichtung oder in Längsrichtung der Vorrichtung erfolgt. Wartungs- und Reparaturkosten können aufgrund der Reduzierung von beweglichen Teilen minimiert werden.

Die Reinigungswalzen können von der dem Objekt abgewandten Seite mit Reinigungsmedium besprüht werden. Dadurch wird ein direktes, gegebenenfalls unter hohem Druck erfolgendes, Besprühen des Objekts vermieden, so dass das Risiko etwaiger Beschädigungen verringert wird.

Gemäß einer weiteren vorteilhaften Ausgestaltung kann die Reinigungseinrichtung in einem Zwischenbereich zwischen den zwei rotierbaren Reinigungswalzen auf der offenen Seite einen rotierbaren Düsen-Reinigungskopf zum Ausbringen von Reinigungsmedium aufweisen. Dabei kann der rotierbare Düsen-Reinigungskopf das zu reinigende Objekt von unten mit Reinigungsmedium besprühen. In Ergänzung dazu können weitere horizontal ausgerichtete Düsen-Reinigungsköpfe vorgesehen sein, mit denen besonders schmutzige Bereiche des Objektes gereinigt werden können. Ein Bediener kann das zu reinigende Objekt insbesondere mit den besonders verschmutzen Stellen im Bereich der Düsen positionieren.

Gemäß einer weiteren vorteilhaften Ausgestaltung kann der die Reinigungseinrichtung beinhaltende Bereich des Gehäuses entlang des Randes dessen offener Seite in Richtung zum Objekt Blenden oder Bürsten zum Auffangen von Reinigungsmedium aufweisen.

Gemäß der Erfindung ist die Steuerungseinrichtung derart eingerichtet, die Reinigungswalzen in einer ersten Betriebsart in entgegengesetzten Umlaufrichtungen zu rotieren, wobei insbesondere eine erste der Reinigungswalzen von oben gesehen entgegen der Uhrzeigerrichtung rotiert und eine zweite der Reinigungswalzen von oben gesehen in der Uhrzeigerrichtung rotiert.

Gemäß einer weiteren vorteilhaften Ausgestaltung kann die Steuerungseinrichtung derart eingerichtet sein, die Reinigungswalzen in einer zweiten Betriebsart jeweils abwechselnd für eine Zeitdauer im Sekundenbereich in und entgegen der Uhrzeigerrichtung zu rotieren.

Gemäß einer weiteren vorteilhaften Ausgestaltung kann die Steuerungseinrichtung derart eingerichtet sein, von der ersten Betriebsart in die zweite Betriebsart zu wechseln, wenn das zu reinigende Objekt gegen die Reinigungswalzen gedrückt ist und auf diese Weise der elektromotorische Leistungsbedarf sich vergrößert.

Gemäß einer weiteren vorteilhaften Ausgestaltung kann die Steuerungseinrichtung derart eingerichtet sein, von der zweiten Betriebsart in die erste Betriebsart zu wechseln, wenn das zu reinigende Objekt von den Reinigungswalzen entfernt ist und auf diese Weise der elektromotorische Leistungsbedarf sich verkleinert.

Gemäß einer weiteren vorteilhaften Ausgestaltung kann die Steuerungseinrichtung derart eingerichtet sein, die Reinigungswalzen und/oder die Vorrichtung wiedereinschaltbar abzuschalten, wenn ein Grenzwert für einen Druck gegen die Reinigungswalzen überschritten ist.

Gemäß einer weiteren vorteilhaften Ausgestaltung kann ein Behälter und Filter aufweisender Kreislauf innerhalb der Vorrichtung ausgebildet sein, der das Reinigungsmedium, insbesondere Wasser, zirkuliert. Ein Kreislauf hat den Vorteil, dass kein Wasseranschluss für die Vorrichtung notwendig ist. Das Reinigungsmedium wird jeweils nach einem Waschgang gefiltert und kann für die nächste Reinigung wiederverwendet werden.

Gemäß einer weiteren praktischen Ausgestaltung kann in den Kreislauf ein von dem zu reinigenden Objekt beabstandeten Filterbereich integriert sein. Das verschmutzte Reinigungsmedium gelangt über eine gitterartige Struktur in den Filterbereich. Der Filterbereich weist eine Filtermatte auf, und darüber angeordnet eine lose Schüttung von Filtermaterial, wie beispielsweise Filter-Bällen. Alternativ zu einer Filtermatte können auch zwei übereinander angeordnete Filtermatten mit unterschiedlichen Feinheitsgraden verwendet werden.

Das Filtermaterial, wie beispielsweise die Filter-Bälle, kann vorzugsweise in einem Netz angeordnet sein. Dies hat den Vorteil, dass das Filtermaterial leicht ausgetauscht werden kann und das Filtermaterial auch nicht leicht in das nachfolgende Pumpsystem gelangen kann.

Durch eine Pumpe wird das Reinigungsmedium durch den Filter und die lose Schüttung in eine Filterpatrone gepumpt und dann in die Düsen-Reinigungsköpfe gepumpt. Von dort gelangt das gefilterte Reinigungsmedium wieder auf das zu reinigende Objekt. Ein derartiger Filterbereich mit einer Filtermatte und lose geschüttetem Filtermaterial kann leicht und kostengünstig gewartet bzw. erneuert werden.

Die Filtermatte und die lose Schüttung können labyrinthartig durch Z-Trennwände teilweise abgetrennt sein, so dass in Strömungsrichtung betrachtet das Reinigungsmedium zunächst das Filterelement durchströmt und dann die lose Schüttung.

Innerhalb des Behälters für das Reinigungsmedium kann zusätzlich ein Tank für Frischwasser für ein nachträgliches Spülen des Objektes angeordnet sein. Damit kann Bauraum und Material eingespart werden.

Zusätzlich kann eine Dosierpumpe an der Vorrichtung angeordnet sein, mittels welcher eine optimale Dosis an Reinigungsmittel ermittelt und eingestellt werden kann.

Eine erfindungsgemäße Vorrichtung kann insbesondere mehrere modular zusammenbaubare, insbesondere lösbar verbundene Elemente umfassen. Bevorzugt umfasst die Vorrichtung unter anderem separat montierbare Reinigungswalzen, einen Behälter als Haupttank, einen Tank für Wasser für eine Vorwäsche und einen Spritzschutz. Eine derartig modular aufgebaute Vorrichtung kann in einfacher Weise bedarfsweise angepasst und mit weiteren Elementen versehen werden. Zudem ist die Vorrichtung leicht zu montieren und für den Transport zu demontieren.

Das zu reinigende Objekt kann entweder durch einen Bediener durch die Vorrichtung geführt werden, wodurch keine zusätzlich ausgebildete Haltekonstruktion und insbesondere keine Fördereinrichtung für das Objekt angeordnet werden muss. Alternativ dazu kann die Vorrichtung derart ausgelegt sein, dass das Objekt durch die von den Reinigungswalzen auf das Objekt ausgeübte Kraft durch die Vorrichtung geführt wird. Hinsichtlich der Ausführungsform, bei der zwei Vorrichtungen einander gegenüberliegend angeordnet sind, wird auf die Möglichkeit verwiesen, das zu reinigende Objekt mittels Seilen zu befestigen, zu halten und gegebenenfalls durch die Vorrichtung zu bewegen.

In einer weiteren vorteilhaften Ausgestaltung der Vorrichtung ist beabstandet von der offenen Seite ein Vorwäschebereich vorgesehen, wobei in dem Vorwäschebereich Hochdruckdüsen zur Erzeugung eines Strahls mit Reinigungsmedium angeordnet sind, mit denen ein stark verschmutztes Objekt zunächst gereinigt, bzw. der Schmutz eingeweicht werden kann. Bevorzugt erzeugen die Hochdruckdüsen einen Strahl mit mindestens 9 bar. Der Druck kann mittels eines Luft-Kompressors oder einer Verdrängerpumpe erzielt werden.

In einer besonders umweltschonendenden Ausgestaltung, weist ein wie vorstehend beschriebener Vorwäschebereich einen Vorwäschetank auf, welcher in strömungsleitender Verbindung mit dem Haupttank steht. Das gesammelte Abwasser aus dem Vorwäschebereich wird in demselben Kreislauf wie das Reinigungsmittel aus der Vorrichtung recycelt.

In einer weiteren vorteilhaften Ausgestaltung ist in dem Aufnahmebereich eine Führungsrinne ausgebildet. Die Führungsrinne kann insbesondere durch Rollen gebildet sein. Insgesamt sind dazu 20 bis 25 Rollen vorgesehen. Die Rollen können über ein Kunststoffkugellager gelagert werden. Bei einem Durchführen eines Fahrrades üben die Reinigungsbürsten eine derartige Kraft auf die Speichen und Räder des Fahrrads aus, dass diese auf den Rollen rotieren und sich das Fahrrad durch die Vorrichtung bewegt. Die Rollen sind vorzugsweise aus Kunststoff, insbesondere PVC.

In einer weiteren vorteilhaften Ausgestaltung der Vorrichtung ist in dem Einlass und/oder dem Auslass in die Führungsrinne für das zu reinigende Objekt eine Blende oder eine Bürste, bevorzugt eine Leistenbürste angeordnet. Die Bürste kann auf der der Führungsrinne zugewandten Seite mit Kunststoff, wie beispielsweise PVC beschichtet sein, um in einfacher zu vermeiden, dass Reinigungsmedium aus der Vorrichtung austritt.

In einer weiteren vorteilhaften Ausgestaltung der Vorrichtung beträgt der Energieverbrauch der Vorrichtung weniger als 250 W. Bevorzugt kann der Energiebedarf mittels eines an der Vorrichtung angeordneten Solarpanels erzeugt werden.

Die Vorrichtung kann insbesondere eine Verbindung zum Internet aufweisen, die es einem Kunden ermöglicht zu bezahlen und unmittelbar im Anschluss daran den Reinigungsvorgang zu starten. Damit kann eine Vorrichtung ohne zusätzliche Arbeitskraft bzw. ohne zusätzlichen Bediener autark verwendet werden. Zusätzlich kann der aktuelle Status der Vorrichtung per Internet an den Betreiber übertragen werden.

Die Erfindung wird nachfolgend anhand von Ausführungsbeispielen in Verbindung mit den Figuren näher beschrieben. Diese folgenden Ausführungen sollen den Schutzbereich nicht einschränken, sondern der Erläuterung der Erfindung dienen. Es zeigen:
- Figur 1: eine Seitenansicht eines Ausführungsbeispiels einer erfindungsgemäßen Vorrichtung;
- Figur 2: eine Seitenansicht des Ausführungsbeispiels im Betrieb;
- Figur 3: eine weitere Seitenansicht des Ausführungsbeispiels im Betrieb;
- Figur 4: ein Ausführungsbeispiel zweier erfindungsgemäßer Vorrichtungen;
- Figur 5: eine weitere Seitenansicht des Ausführungsbeispiels einer erfindungsgemäßen Vorrichtung;
- Figur 6: eine weitere Ansicht des Ausführungsbeispiels einer erfindungsgemäßen Vorrichtung beim Transport;
- Figur 7: eine weitere Ansicht des Ausführungsbeispiels einer erfindungsgemäßen Vorrichtung beim Transport;
- Figur 8: eine weitere Ansicht des Ausführungsbeispiels einer erfindungsgemäßen Vorrichtung;
- Figur 9: eine Ansicht eines Reinigungskopfes;
- Figur 10: ein zweites Ausführungsbeispiel einer erfindungsgemäßen Vorrichtung in einer perspektivischen Darstellung von schräg vorne;
- Figur 11: die Vorrichtung aus Fig. 10 in einer perspektivischen Darstellung von schräg hinten;
- Figur 12: die Vorrichtung aus Fig. 10 in einer Vorderansicht;
- Figur 13: ein drittes Ausführungsbeispiel einer erfindungsgemäßen Vorrichtung in einer Vorderansicht;
- Figur 14: ein Lager für eine Reinigungswalze in einer Seitenansicht
- Figur 15: ein viertes Ausführungsbeispiel einer erfindungsgemäßen Vorrichtung in einer perspektivischen Ansicht von der Seite,
- Figur 16: ein Filterbereich aus Fig. 15 in einer Seitenansicht,
- Figur 17: ein fünftes Ausführungsbeispiel in einer perspektivischen Vorderansicht.

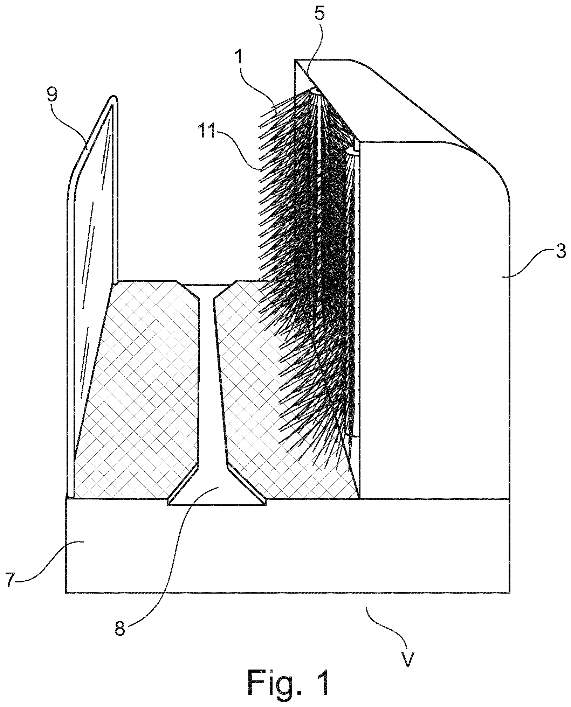

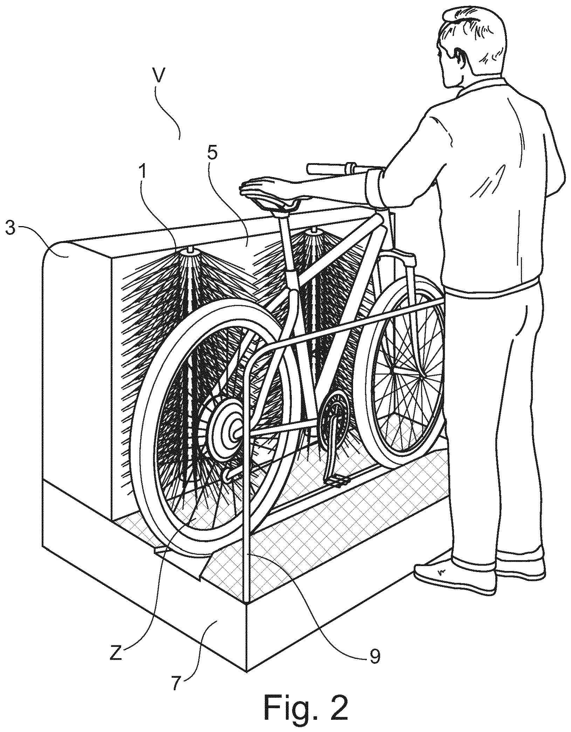

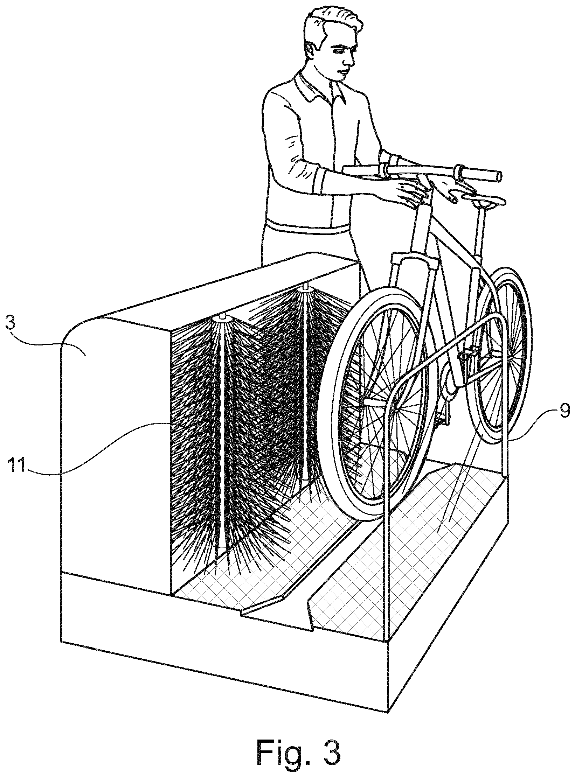

Figur 1 zeigt eine Seitenansicht eines Ausführungsbeispiels einer erfindungsgemäßen Vorrichtung V. Die Vorrichtung V weist eine Reinigungseinrichtung 1 auf, die in einem Gehäuse 3 positioniert und insbesondere fixiert ist. Beispielsweise können in dem Gehäuse 3 eine Anzahl, insbesondere zwei Reinigungswalzen 11, drehbar vertikal gelagert sein. Beispielsweise können die Reinigungswalzen 11 mittels entlang der Rotationsachsen, innerhalb der Reinigungswalzen 11 angeordneten Elektromotoren bewegt werden. Die beiden Reinigungswalzen 11 können in beliebige Umdrehungsrichtungen gedreht werden. Das Gehäuse 3 weist mindestens eine offene Seite 5 auf. Das Gehäuse 3 kann zusätzlich einen Boden, einen Deckel, zwei Stirnseitenflächen und gegenüberliegend zur offenen Seite 5 eine weitere Seitenabdeckung aufweisen. Auf diese Weise ist die Reinigungseinrichtung 1 mit den Reinigungswalzen weitgehend vor von außen einwirkenden mechanischen Kräften geschützt im Gehäuse 3 fixierbar. Aus der offenen Seite 5 kann ein Zugang zu den Reinigungswalzen 11 geschaffen sein. Während der Reinigung eines Objektes, insbesondere eines Zweirades Z, wirkt das Gehäuse 3 ebenso als Schutz, damit kein Reinigungsmittel von der Reinigungseinrichtung 1 in die Umgebung beispielsweise auf einen Menschen abgegeben wird. Der Boden des Gehäuses 3 gemäß diesem Ausführungsbeispiels ist an der offenen Seite 5 von unterhalb der Reinigungseinrichtung 1 herausgeführt und schafft auf diese Weise einen Aufnahmebereich 7 zum Tragen und Positionieren des zu reinigenden Objektes insbesondere des Zweirads Z. Der Aufnahmebereich 7 bildet eine Führungsrinne 8 aus, entlang der ein zu reinigendes Zweirad Z, das in Figuren 2 und 3 dargestellt ist, von einem Menschen bewegt werden kann. Auf diese Weise ist ein bestimmter Abstand zwischen einem Zweirad Z zu den Reinigungswalzen 11 einstellbar. Das Zweirad Z und das Gehäuse 3 können zueinander angeordnet werden und die Reinigungseinrichtung 1 kann mittels der Reinigungswalzen 11 durch die offenen Seite 5 auf das Zweirad Z einwirken und dieses beispielsweise abbürsten und/oder mit einer Reinigungsflüssigkeit beaufschlagen. Die Reinigungseinrichtung 1 kann eine Sprüheinrichtung und/oder eine Trocknungseinrichtung aufweisen. Gegenüberliegend zur offenen Seite 5 ist an dem dortigen Endbereich des Bodens eine Festhalteeinrichtung 9 hier in Form eines Haltebügels, befestigt, an der sich ein Mensch festhalten kann, aber an der ebenso ein Zweirad Z angelehnt werden kann. Der Aufnahmebereich 7 kann auf der Seite zu einem Zweirad Z einen Belag aufweisen, der eine griffige Oberflächenprofilierung aufweist, so dass diese einen Halt für einen gehenden Menschen anbieten kann. Der Belag kann zudem eine Reinigungsflüssigkeit abweisen, sowie die Vorrichtung vor Verschleiß schützen.

Figur 2 zeigt eine Seitenansicht des Ausführungsbeispiels der Vorrichtung V gemäß Figur 1 im Betrieb. Es ist dargestellt wie eine Bedienperson ein Zweirad Z entlang der Führungsrinne 8 in eine Relativ- und Reinigungsposition zu den im Gehäuse 3 fixierten Reinigungswalzen 11 der Reinigungseinrichtung 1 verschiebt. Aus der offenen Seite 5 heraus bürsten die Reinigungswalzen 11 zunächst eine erste Seite des Zweirades Z, das auf dem Aufnahmebereich 7 gestellt ist. Zwischen dem Zweirad Z und der Bedienperson ist ein Haltebügel fixiert, der zudem die Bedienperson von dem Fahrrad beabstandet und diese schützt. Die Bedienperson kann das Zweirad Z während des Reinigens halten und kann zudem das Zweirad Z mit einer ausgewählten Kraft gegen die Reinigungswalzen drücken, um die Reinigungswirkung zu verstärken.

Figur 3 zeigt eine weitere Seitenansicht des Ausführungsbeispiels der Vorrichtung V gemäß Figur 1 im Betrieb. Im Unterschied zu Figur 2 wird das Zweirad Z nun an dessen zweiter Seite gereinigt. Figur 3 zeigt, dass die Bedienperson alternativ zu Figur 2 eine weitere Relativposition zum Zweirad Z und der Vorrichtung V während des Reinigens einnehmen kann. Das Bezugszeichen 9 bezeichnet einen Bügel, der zudem vor dem zu reinigenden Zweirad Z schützt.

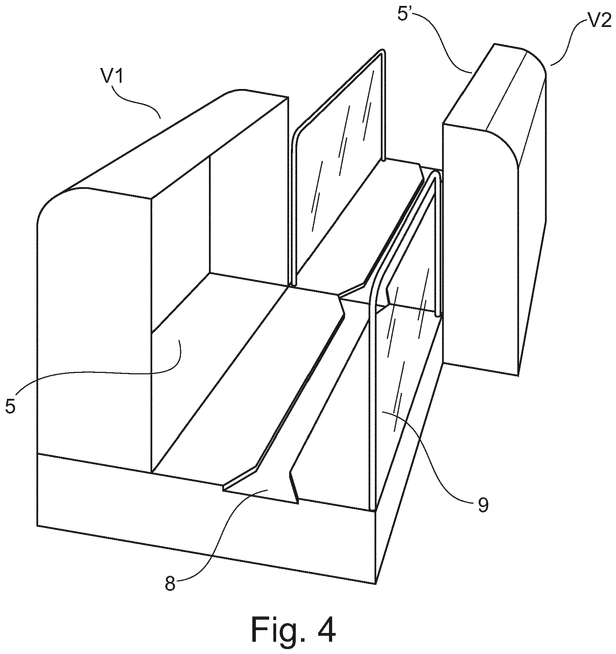

Figur 4 zeigt ein Ausführungsbeispiel der Verwendung zweier erfindungsgemäßer Vorrichtungen V1 und V2. Dabei werden erfindungsgemäße Vorrichtungen V modulartig aneinander gereiht. Die Vorrichtungen V1 und V2 sind baugleich. In Längsrichtung werden die Vorrichtungen V1 und V2 entlang deren Führungsrinnen 8 und 8' aneinander angeordnet. Die offene Seite 5 der ersten Vorrichtung V1 ist der offenen Seite 5' der zweiten Vorrichtung V2 zugewandt. Auf diese Weise kann ein entlang beider Führungsrinnen 8 und 8' bewegtes Zweirad Z zuerst an dessen einen Seite und danach an dessen zweiten Seite gereinigt werden, ohne dass das Zweirad Z umgedreht und erneut an einer einzigen Vorrichtung V vorbeigeführt werden muss. Reinigungswalzen 11 können horizontal, vertikal und/oder diagonal in einem Gehäuse 3 drehbar gelagert sein.

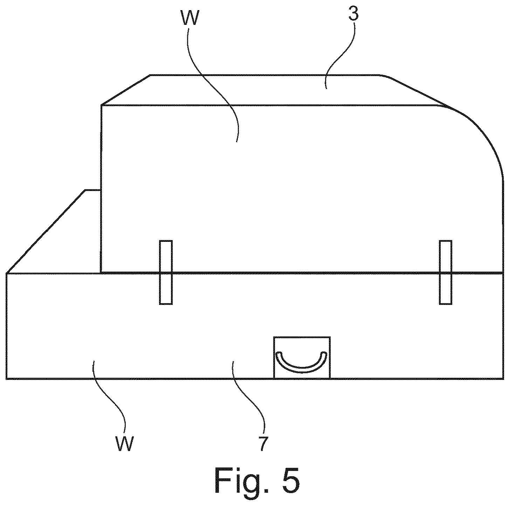

Figur 5 zeigt eine weitere Seitenansicht des Ausführungsbeispiels einer erfindungsgemäßen Vorrichtung gemäß Figur 1 nun in einem zusammengeklappten Zustand. Der Aufnahmebereich 7 des Bodens und der die Reinigungseinrichtung 1 beinhaltende Bereich des Gehäuses 3 sind derart aufeinandergelegt, dass die offene Seite 5 abgedeckt ist. Beispielsweise kann mittels eines Drehgelenkes der Aufnahmebereich 7 mit dem die Reinigungseinrichtung 1 beinhaltenden Bereich des Gehäuses 3 mechanisch verbunden sein. Das Gehäuse 3 kann in den Aufnahmebereich 7 eingeklappt und abgedeckt werden. In dieser Position kann die Vorrichtung mittels mechanischer Schlösser wieder lösbar verriegelt werden. Der Aufnahmebereich 7 des Bodens und der die Reinigungseinrichtung 1 beinhaltende Bereich des Gehäuses 3 können in Form einer Wanne W oder einer Schale oder eines Kastens geschaffen sein. Damit kann die Vorrichtung entsprechend einem Koffer gehandhabt werden. An der Vorrichtung V kann ein Haltegriff angeordnet sein.

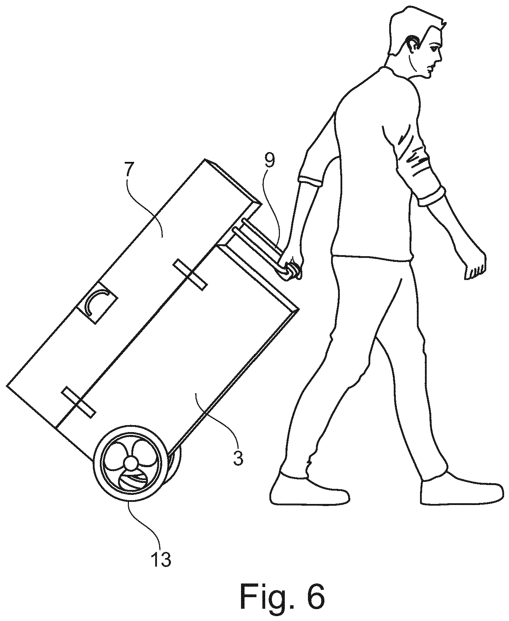

Figur 6 zeigt eine weitere Ansicht des Ausführungsbeispiels einer erfindungsgemäßen Vorrichtung beim Transport. Zusammengeklappt kann ein Mensch an der gebogenen Stange beziehungsweise an dem Bügel 9 die Vorrichtung V greifen und ziehen, wobei mittels Transportrollen 13 die Vorrichtung bewegt werden kann. Das Gehäuse 3 weist an dessen Boden auf der der offenen Seite 5 abgewandten Seite mindestens eine Transportrolle 13 oder mindestens ein Rad auf.

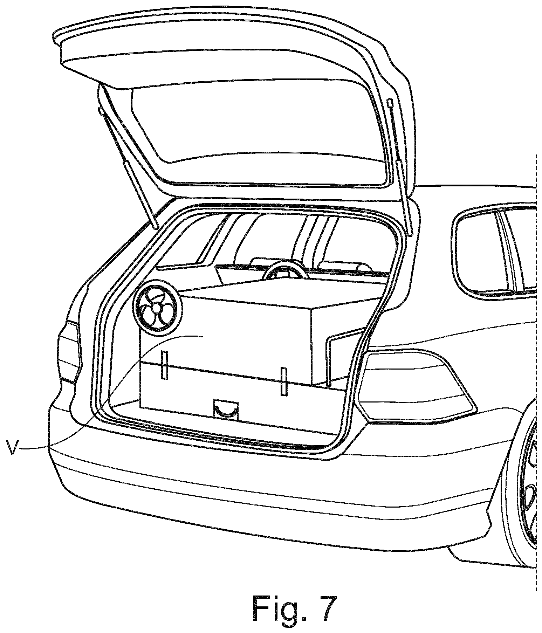

Figur 7 zeigt eine weitere Ansicht des Ausführungsbeispiels einer erfindungsgemäßen Vorrichtung V beim Transport. Die Vorrichtung V kann einfach in einem Kofferraum eines Kraftfahrzeuges oder Personenkraftwagens aufgenommen und darin transportiert werden.

Die Dimensionen der erfindungsgemäßen Vorrichtung V sind vorliegend in zusammengeklapptem Zustand 1,44 m x 0,85 m x 0,55 m (B x H X T).

In ausgeklappten Zustand betragen die Abmessungen der Vorrichtung V vorliegend 1,44 m x 0,85 m x 0,95 m.

Das Gewicht der Vorrichtung V ist hier circa 80 kg.

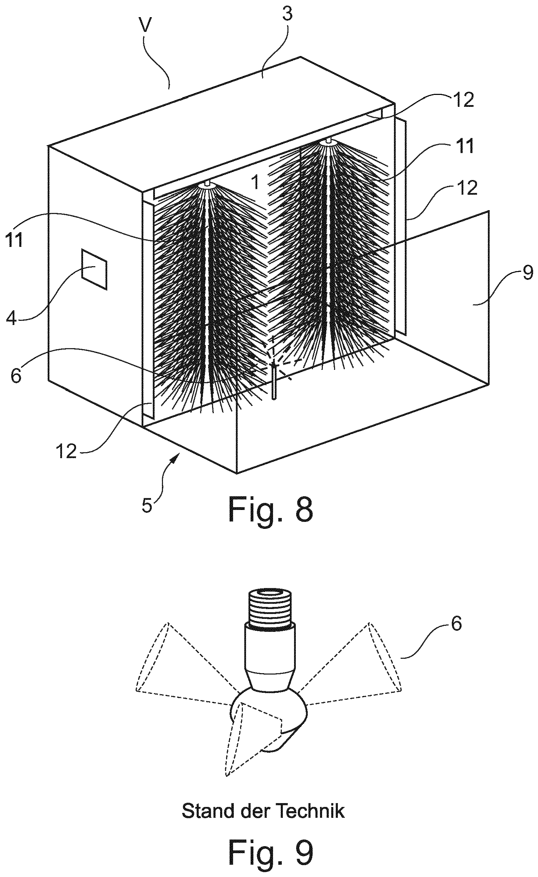

Figur 8 zeigt eine weitere Ansicht des Ausführungsbeispiels einer erfindungsgemäßen Vorrichtung. Die Vorrichtung V zum Reinigen eines Objektes, insbesondere eines Zweirades Z, weist ein eine Reinigungseinrichtung 1 beinhaltendes Gehäuse 3 mit einer offenen Seite 5 auf, an der das Objekt und das Gehäuse 3 zueinander positionierbar sind und aus der die Reinigungseinrichtung 1 auf das Objekt einwirkend bereitstellbar ist. Zudem ist für die Reinigungseinrichtung 1 eine Steuerungseinrichtung 4 zum Steuern der Reinigungseinrichtung 1 zugeordnet.

Die Reinigungseinrichtung 1 weist in einem Zwischenbereich zwischen den zwei rotierbaren Reinigungswalzen 11 auf der offenen Seite 5 einen rotierbaren Düsen-Reinigungskopf 6 zum Ausbringen von Reinigungsmedium auf. Der Reinigungskopf 6 ist in einem unteren räumlichen Bereich derart angeordnet, dass Fahrradpedale nicht berührt werden. Der Reinigungskopf 6 kann nach einem Verstellen zudem einfach wieder in Position gebracht werden. Der Reinigungskopf 6 sprüht beim Drehen um eine vertikale Achse beispielsweise das Wasser in Richtung einer oberen Halbkugel in die Luft. Aufgrund der Lage zwischen den Reinigungsbürsten oder Reinigungswalzen 11 verkleinert sich dieser räumliche Bereich der Halbkugel nach vorne zum Objekt. Sprühstrahlen können bei Rotation um eine vertikale Achse von 0° bis 90° zur Vertikalen zum Objekt verlaufen. Andernfalls werden die Sprühstrahlen von den Reinigungswalzen 11 aufgenommen. Die Versorgung mit dem Reinigungsmedium, hier Wasser, kann mittels einer Rohrleitung geschaffen sein. Beispielsweise können circa 7L/min auf einen unteren Teil eines Zweirades aufgebracht werden, um Schmutz von Pedalen, Kette und Schaltwerk zu entfernen.

Der die Reinigungseinrichtung 1 beinhaltende Bereich des Gehäuses 3 weist entlang des Randes dessen offener Seite 5 in Richtung zum Objekt Blenden oder Bürsten zum Auffangen 12 von Reinigungsmedium beispielsweise in Form von gesprühtem Wasser auf. Derartige Bürsten können beispielsweise 15 mm breit sein. Der die Reinigungseinrichtung 1 beinhaltenden Bereich des Gehäuses 3 ist hier in Form eines Kastens ausgebildet.

Die Höhe einer jeweiligen Reinigungswalze 11 kann circa 760mm aufweisen. Auf diese Weise ist vorteilhaft eine Anpassung an durchschnittlich auf 800mm Höhe sich befindliche Lenker gegeben. Lediglich Lenker und Sattel werden damit nicht berührt, im Gegensatz zu Reifen und Rahmen eines durchschnittlichen Fahrrads. Die Dimensionen sind ebenso vorteilhaft um eine erfindungsgemäße Vorrichtung in ein Mittelklasse Kombiauto zu verbringen.

Eine Festhalteeinrichtung 9 gemäß Figur 1 ist hier zusätzlich als Schutz vor versprühtem Reinigungsmedium beispielsweise in Form einer Kunststoffscheibe, insbesondere als transparente Scheibe, geschaffen. Die Reinigungsstrahlschutzscheibe kann beispielsweise aus Polyethylen PET geschaffen sein. Diese Scheibe kann die offene Seite 5 abdecken.

Die Vorrichtung kann ohne einen festen Wasseranschluss arbeiten. Wasser kann von einem in die Vorrichtung eingebauten Behälter entnommen werden. Schmutzwasser kann beispielsweise über drei Filterstufen von 100µm, 20µm und 5µm gereinigt werden.

Die Steuerungseinrichtung 4 ist derart eingestellt, dass die Reinigungswalzen 11, die ebenso als Reinigungsbürsten bezeichnet werden können, beim Drehen keinen Schutz oder Wasser nach außerhalb der Vorrichtung V verteilen. Falls kein Fahrrad in der Vorrichtung ist, drehen die Reinigungswalzen 11 sich nach "innen", das heißt, die erste entgegen und die zweite im Uhrzeigersinn. Ist ein Fahrrad eingebracht, erfassen dies die Reinigungswalzen 11, da Druck auf diese ausgeübt wird und die Elektromotoren die Leistung erhöhen müssen und mehr Strom "ziehen". Die Reinigungswalzen 11 drehen daraufhin für jeweils wenige Sekunden in und entgegengesetzt dem Uhrzeigersinn. Auf diese Weise wird die Reinigungswirkung wirksam vergrößert. Wasserverluste werden vermieden und Personen werden nicht beschmutzt. Reinigungsmedium kann Wasser oder jedes bekannte flüssige Mittel sein. Zusätze sind ebenso möglich. Die Steuerungseinrichtung 4 kann einen Mikroprozessor aufweisen, der Ströme der Elektromotoren erfassen und entsprechende Steuersignale für die Drehrichtungen und Drehdauern ausgeben kann.

Ist ein Druck auf eine Reinigungswalze 11 zu groß, werden diese mittels der Steuerungseinrichtung 4 angehalten und es wird nach einigen Sekunden ein Neustart versucht. War dies zehnmal hintereinander nicht möglich, wird eine Fehlermeldung an der Steuerungseinrichtung 4 ausgegeben. Ist dies der Fall muss ein Neustart der gesamten Vorrichtung - beispielsweise mittels Drücken eines Notaus-Schalters - ausgeführt werden. Nach dessen Freigeben kann die Vorrichtung wieder in Betrieb genommen werden. Auf diese Weise können die Elektromotoren geschützt werden.

Figur 9 zeigt eine Ansicht eines herkömmlichen Reinigungskopfes. Der Reinigungskopf 6 ist hier um eine vertikale Achse rotierbar. Er kann ein Reinigungsmedium, besonders vorteilhaft Wasser, ausspritzen und/oder aussprühen, aus Edelstahl bestehen und hier drei Spritzfächer aufweisen, die hier in einen Bereich einer oberen Halbkugel einsprühen. Gemäß Figur 8 ist der Reinigungskopf 6 zwischen zwei Reinigungswalzen 11 angeordnet, so dass dadurch die Halbkugel der Besprühung sich in Form eines Trichters ändern kann. Mittels des Reinigungskopfs 6 kann eine kontinuierliche Reinigung ausgeführt werden.

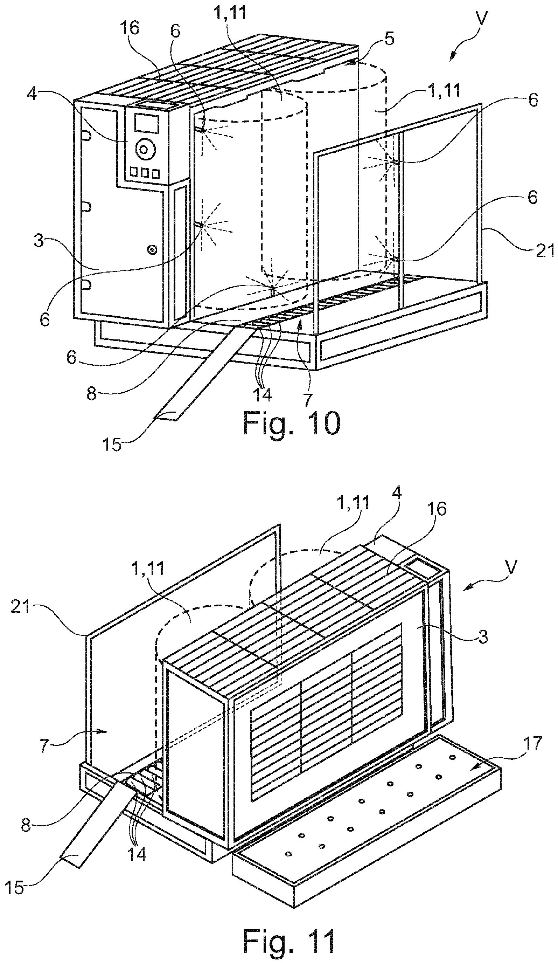

In den Fig. 10 bis 12 ist eine zweite Ausführungsform einer erfindungsgemäßen Vorrichtung V dargestellt. Die Vorrichtung V weist ein Gehäuse 3 mit einer offenen Seite 5 auf. In der offenen Seite 5 sind als Reinigungseinrichtung 1 zwei in vertikaler Richtung drehbar gelagerte Reinigungswalzen 11 angeordnet.

Vor der offenen Seite 5 ist ein Aufnahmebereich 7 zur Aufnahme des zu reinigenden Objektes, insbesondere eines Zweirades, ausgebildet. In dem Aufnahmebereich 7 ist eine Führungsrinne 8 angeordnet. Die Führungsrinne 8 ist aus einer Vielzahl von Rollen 14 gebildet. Zum Einlass in die Führungsrinne 8 ist eine Rampe 15 vorgesehen, über die ein Zweirad in den Aufnahmebereich 7 geführt werden kann.

Zusätzlich zu den Reinigungswalzen 11 sind mehrere Reinigungsköpfe 6 angeordnet, die das zu reinigende Objekt im Aufnahmebereich 7 mit Reinigungsmedium besprühen. Ein Reinigungskopf 6 ist derart angeordnet, dass er das Objekt von unten besprüht. Ebenfalls sind auf der Einlassseite der Reinigungswalzen 11, sowie zwischen den Reinigungswalzen 11 zwei Reinigungsköpfe 6 in Hochrichtung verteilt angeordnet.

Der Aufnahmebereich 7 wird auf der der offenen Seite 5 gegenüberliegenden Seite durch einen Spritzschutz 21 begrenzt.

An dem Gehäuse 3 ist eine Steuerung 4 angeordnet. Die Energieversorgung der Vorrichtung 1 kann mittels eines auf dem Deckel der Vorrichtung V angeordneten Solarpanels 16 erfolgen.

Wie nur in Fig. 11 dargestellt ist, ist neben dem Aufnahmebereich 7 seitlich der Vorrichtung V ein Vorwäschebereich 17 angeordnet.

Ebenfalls gut in Fig. 11 zu erkennen ist, dass die Vorrichtung V modular aufgebaut ist. Die Vorrichtung V ist aus dem Gehäuse 3, dem Vorwäschebereich 17, dem Spritzschutz 21 und dem Aufnahmebereich 7 zusammengesetzt.

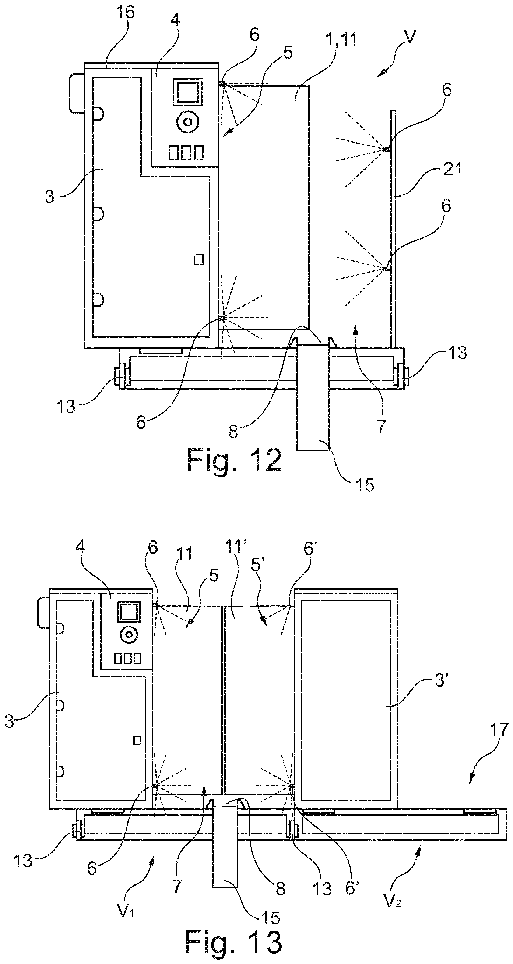

Das in Fig. 13 gezeigte dritte Ausführungsbeispiel einer erfindungsgemäßen Vorrichtung zeigt eine erste Vorrichtung V1 und eine zweite Vorrichtung V2, die jeweils mit ihrer offenen Seite 5 und 5' gegenüberliegend angeordnet sind. Durch den modularen Aufbau der erfindungsgemäßen Vorrichtungen V1 und V2 kann eine solche Anordnung in einfacher Weise erzielt werden.

Der Aufnahmebereich 7 ist von zwei Seiten mit in vertikaler Richtung gelagerten Reinigungswalzen 11 und 11' umgeben. Für eine Reinigung des Objektes ist deshalb nur ein einmaliger Durchlauf durch den Aufnahmebereich 7 notwendig. Neben dem Aufnahmebereich 7 ist zusätzlich an der Vorrichtung V2 ein Vorwäschebereich 17 angeordnet.

Für die in den Fig. 10 bis 14 beschriebenen Ausführungsformen einer erfindungsgemäßen Vorrichtung V sind jeweils Transportrollen 13 unter der Vorrichtung V angeordnet. Damit kann die Vorrichtung V leicht verschoben und transportiert werden.

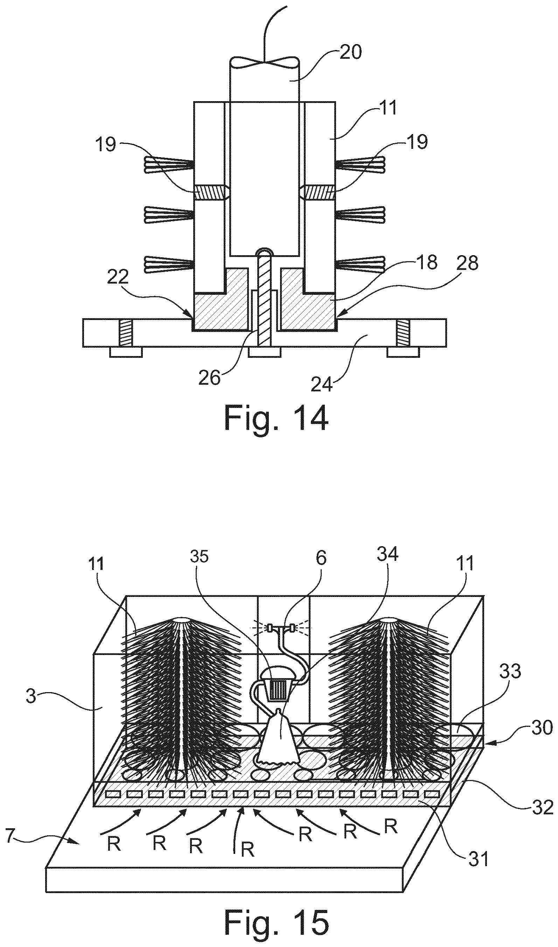

In Fig. 14 ist ein Lager 18 für die Lagerung der Reinigungswalzen 11 dargestellt. Das Lager 18 ist in einer dafür vorgesehenen Aussparung 22 in einer Platte 24 angeordnet.

Zur Rotation der Reinigungswalzen 11 sind die Reinigungswalzen 11 mittels Madenschrauben 19 drehfest mit einem Trommelmotor 20 verbunden. Der Trommelmotor 20 ist mittels einer Gewindestange 26 ebenfalls an der Platte 24 gelagert.

Zwischen dem Lager 18 und der Platte 24 ist ein Spalt 28 vorgesehen, durch den Reinigungsmedium von den Reinigungswalzen 11 gelangen kann, ohne einen negativen Einfluss auf die Lagerung auszuüben.

In Fig. 15 ist die erfindungsgemäße Vorrichtung V mit einem in dem Gehäuse 3 angeordneten Filterbereich 30 dargestellt. Der Filterbereich 30 ist beabstandet zu dem Aufnahmebereich 7 angeordnet. Reinigungsmedium, welches zur Reinigung des Objektes verwendet wurde, läuft entlang der Pfeile R unterhalb der Reinigungswalzen 11 durch eine gitterförmige Struktur 31 in den Filterbereich 30. In dem Filterbereich 30 ist eine Filtermatte 32 angeordnet. In Hochrichtung betrachtet über der Filtermatte 32 ist lose geschüttetes Filtermaterial 33 in Form von Filterbällen angeordnet. Mittels einer Pumpe 34 wird das verschmutze Reinigungsmedium durch den Filterbereich 30 gepumpt und in eine Filterpatrone 35 gepumpt. Stromabwärts der Filterpatrone 35 ist ein Reinigungskopf 6 angeordnet, zu welchem das Reinigungsmedium nach Durchgang durch den Filterbereich 30 und die Filterpatrone 35, gelangt.

Der Filterbereich 30 ist vorzugsweise unterhalb der Reinigungswalzen 11 angeordnet. Der Filterbereich 30 ist vorzugsweise gegenüber den Walzen 11 abgedichtet, so dass kein ungefiltertes verschmutztes Reinigungsmedium zu den Walzen 11 gelangen kann. Das Reinigungsmedium wird beispielsweise im Aufnahmebereich 7 und durch Öffnungen (Pfeile R) in den Filterbereich 30 angesogen.

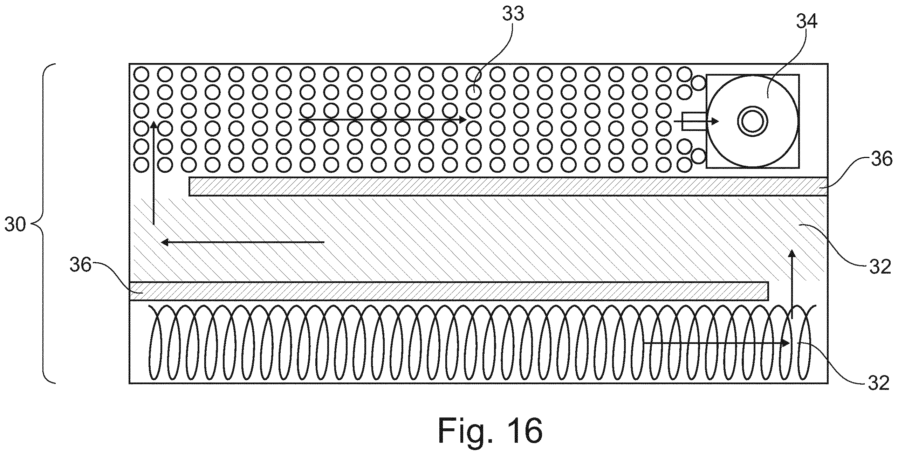

In Fig. 16 ist der Filterbereich 30 abgebildet. Das verschmutzte Reinigungsmedium strömt durch Öffnungen in den Filterbereich 30 am unteren Rand ein und wird von der Pumpe 34 zunächst durch eine Filtermatte 32 mit grobem Filtermaterial, dann durch eine Filtermatte 32 mit feinem Filtermaterial und anschließend durch lose geschüttetes Filtermaterial 33 gesaugt. Das lose geschüttete Filtermaterial 33 ist beispielsweise aus Filterbällen (z.B. Aqualoon®) aufgebaut, die auch vorzugsweise in einem Netz angeordnet sind. Dadurch können die Filterbälle leicht aus dem Filterbereich 30 entfernt oder ausgetauscht werden. Der Durchflussweg kann beispielsweise durch Z-Trennwände 36 definiert sein, so dass das zu filternde Reinigungsmedium durch diese Z-Trennwände 36 umgeleitet und der Pumpe 34 zugeleitet wird.

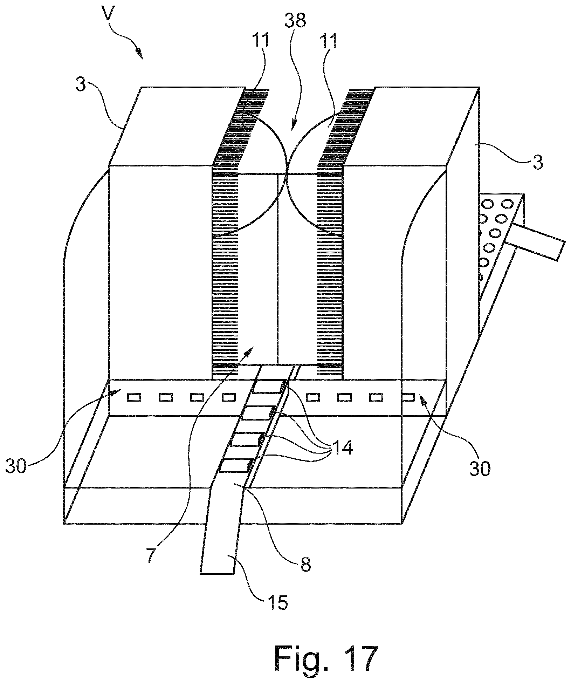

In Fig. 17 ist ein fünftes Ausführungsbeispiel einer erfindungsgemäßen Vorrichtung V dargestellt. Die Vorrichtung umfasst ein Gehäuse 3 welches in Längsrichtung betrachtet eine Öffnung 38 in Form eines Aufnahmebereichs 7 aufweist. An dem Gehäuse 3 ist jeweils links und rechts des Aufnahmebereichs 7 eine Reinigungswalze 11 angeordnet. Der Filterbereich 30, erstreckt sich unterhalb der Reinigungswalzen 11.

Zur Einführung eines Fahrrades ist eine Rampe 15 vorgesehen, die in eine Führungsrinne 8 mit Rollen 14 übergeht. Das in diesem fünften Ausführungsbeispiel gezeigte Gehäuse 3 weist die gleiche Ausdehnung auf, wie ein in den vorherigen Ausführungsbeispielen gezeigtes Gehäuse 3. In diesem Fall wird das Objekt nicht an der Länge des Gehäuses 3 vorbeigeführt, sondern durch die Öffnung 38 durch den Aufnahmebereich 7 geführt, der sich quer zur Längsrichtung des Gehäuses 3 erstreckt.

## Patentansprüche

1. Vorrichtung (V) zum Reinigen eines Objektes, insbesondere eines Zweirades (Z), wobei ein eine Reinigungseinrichtung (1) beinhaltendes Gehäuse (3) mit einer offenen Seite (5), an der das Objekt und das Gehäuse (3) zueinander positionierbar sind und aus der die Reinigungseinrichtung (1) auf das Objekt einwirkend bereitstellbar ist, wobei die Reinigungseinrichtung (1) eine Steuerungseinrichtung (4) zum Steuern der Reinigungseinrichtung (1) aufweist, **dadurch gekennzeichnet, dass** die Reinigungseinrichtung (1) zwei mittels Elektromotor(en) rotierbare bürstenartige Reinigungswalzen (11) aufweist, wobei die Steuerungseinrichtung (4) derart eingerichtet ist, die Reinigungswalzen (11) in einer ersten Betriebsart in entgegengesetzten Umlaufrichtungen zu rotieren.

2. Vorrichtung (V) gemäß Anspruch 1, **dadurch gekennzeichnet, dass** die Reinigungseinrichtung (1) in einem Zwischenbereich zwischen den zwei rotierbaren Reinigungswalzen auf der offenen Seite (5) einen rotierbaren Düsen-Reinigungskopf (6) zum Ausbringen von Reinigungsmedium aufweist.

3. Vorrichtung (V) gemäß einem der vorhergehenden Ansprüche, **dadurch gekennzeichnet, dass** der die Reinigungseinrichtung (1) beinhaltende Bereich des Gehäuses (3) entlang des Randes dessen offener Seite (5) in Richtung zum Objekt Blenden oder Bürsten zum Auffangen (12) von Reinigungsmedium aufweist.

4. Vorrichtung (V) gemäß einem der vorhergehenden Ansprüche, **dadurch gekennzeichnet, dass** die Steuerungseinrichtung (4) derart eingerichtet ist, dass in der ersten Betriebsart eine erste der Reinigungswalzen von oben gesehen entgegen der Uhrzeigerrichtung rotiert und eine zweite der Reinigungswalzen von oben gesehen in der Uhrzeigerrichtung rotiert.

5. Vorrichtung (V) gemäß einem der vorhergehenden Ansprüche, **dadurch gekennzeichnet, dass** die Steuerungseinrichtung (4) derart eingerichtet ist, die Reinigungswalzen (11) in einer zweiten Betriebsart jeweils abwechselnd für eine Zeitdauer im Sekundenbereich in und entgegen der Uhrzeigerrichtung zu rotieren.

6. Vorrichtung (V) gemäß einem der vorhergehenden Ansprüche, **dadurch gekennzeichnet, dass** die Steuerungseinrichtung (4) derart eingerichtet ist, von der ersten Betriebsart in die zweite Betriebsart zu wechseln, wenn das zu reinigende Objekt gegen die Reinigungswalzen (11) gedrückt ist und auf diese Weise der elektromotorische Leistungsbedarf sich vergrößert.

7. Vorrichtung (V) gemäß einem der vorhergehenden Ansprüche, **dadurch gekennzeichnet, dass** die Steuerungseinrichtung (4) derart eingerichtet ist, von der zweiten Betriebsart in die erste Betriebsart zu wechseln, wenn das zu reinigende Objekt von den Reinigungswalzen (11) entfernt ist und auf diese Weise der elektromotorische Leistungsbedarf sich verkleinert.

8. Vorrichtung (V) gemäß einem der vorhergehenden Ansprüche, **dadurch gekennzeichnet, dass** die Steuerungseinrichtung (4) derart eingerichtet ist, die Reinigungswalzen (11) und/oder die Vorrichtung wiedereinschaltbar abzuschalten, wenn ein Grenzwert für einen Druck gegen die Reinigungswalzen (11) überschritten ist.

9. Vorrichtung (V) gemäß einem der vorhergehenden Ansprüche 2 bis 8, **dadurch gekennzeichnet, dass** ein Behälter und Filter aufweisender Kreislauf innerhalb der Vorrichtung ausgebildet ist, der das Reinigungsmedium, insbesondere Wasser, zirkuliert.

10. Vorrichtung (V) gemäß einem der vorhergehenden Ansprüche, **dadurch gekennzeichnet, dass** beabstandet von der offenen Seite (5) ein Vorwäschebereich (17) angeordnet ist.

11. Vorrichtung (V) gemäß einem der vorhergehenden Ansprüche, **dadurch gekennzeichnet, dass** das zu reinigende Objekt in einer Führungsrinne (8) durch die Vorrichtung (V) geführt wird, wobei die Führungsrinne (8) durch Rollen (14) gebildet ist.

12. Vorrichtung (V) gemäß einem der vorhergehenden Ansprüche, **dadurch gekennzeichnet, dass** an dem Gehäuse (3) ein Solarpanel (16) angeordnet ist.

13. Vorrichtung (V) gemäß einem der vorhergehenden Ansprüche, **dadurch gekennzeichnet, dass** das Gehäuse (3) und die Reinigungsvorrichtung (1) lösbar miteinander verbunden sind.

14. Vorrichtung (V) gemäß einem der vorhergehenden Ansprüche, **dadurch gekennzeichnet, dass** in dem Gehäuse (3) ein Filterbereich (30) angeordnet ist, wobei der Filterbereich (30) mindestens eine Filtermatte (32), sowie in Hochrichtung betrachtet darüber angeordnetes lose geschüttetes Filtermaterial (33) umfasst, wobei eine Pumpe (34) Reinigungsmedium durch die mindestens eine Filtermatte (32) und das lose geschüttete Filtermaterial (33) in mindestens eine Filterpatrone (35) pumpt.

## Claims

1. Apparatus (V) for cleaning an object, in particular a two-wheel vehicle (Z), wherein a housing (3) containing a cleaning device (1) and having an open side (5), on which the object and the housing (3) can be positioned relative to one another and from which the cleaning device (1) may be made available acting on the object, is provided, wherein the cleaning device (1) comprises a control device (4) for controlling the cleaning device (1),
**characterized in that** the cleaning device (1) comprises two brush-like cleaning rollers (11) rotatable by means of electric motor(s),
wherein the control device (4) is adapted to rotate the cleaning rollers (11) in opposite directions of rotation in a first operating mode.

2. Apparatus (V) according to claim 1, **characterized in that** the cleaning device (1) has a rotatable nozzle cleaning head (6) for dispensing cleaning medium in an intermediate region between the two rotatable cleaning rollers on the open side (5).

3. Apparatus (V) according to one of the preceding claims, **characterized in that** the region of the housing (3) containing the cleaning device (1) along the edge of its open side (5) in the direction of the object comprises apertures or brushes for collecting (12) cleaning medium.

4. Apparatus (V) according to one of the preceding claims, **characterized in that** the control device (4) is adapted such that, in the first operating mode, a first one of the cleaning rollers rotates counterclockwise as seen from above and a second one of the cleaning rollers rotates clockwise as seen from above.

5. Apparatus (V) according to one of the preceding claims, **characterized in that** the control device (4) is adapted to rotate the cleaning rollers (11) in a second operating mode alternately for a period of time in the range of seconds in the clockwise direction and in the counterclockwise direction.

6. Apparatus (V) according to one of the preceding claims, **characterized in that** the control device (4) is adapted to change from the first operating mode to the second operating mode when the object to be cleaned is pressed against the cleaning rollers (11) and in this way the electromotive power requirement increases.

7. Apparatus (V) according to one of the preceding claims, **characterized in that** the control device (4) is adapted to change from the second operating mode to the first operating mode when the object to be cleaned is removed from the cleaning rollers (11) and in this way the electromotive power requirement decreases.

8. Apparatus (V) according to one of the preceding claims, **characterized in that** the control device (4) is adapted to switch the cleaning rollers (11) and/or the apparatus off in a reset-table manner when a threshold value for a pressure against the cleaning rollers (11) is exceeded.

9. Apparatus (V) according to one of the preceding claims 2 to 8, **characterized in that** a circuit comprising a container and a filter is formed inside the apparatus, which circulates the cleaning medium, in particular water.

10. Apparatus (V) according to one of the preceding claims, **characterized in that** a pre-wash area (17) is arranged spaced apart from the open side (5).

11. Apparatus (V) according to one of the preceding claims, **characterized in that** the object to be cleaned is guided in a guide trough (8) through the apparatus (V), wherein the guide trough (8) is formed by rollers (14).

12. Apparatus (V) according to one of the preceding claims, **characterized in that** a solar panel (16) is arranged on the housing (3).

13. Apparatus (V) according to one of the preceding claims, **characterized in that** the housing (3) and the cleaning apparatus (1) are detachably connected to each other.

14. Apparatus (V) according to one of the preceding claims, **characterized in that** a filter region (30) is arranged in the housing (3), wherein the filter region (30) comprises at least one filter mat (32) and loosely poured filter material (33) arranged above it in the vertical direction, wherein a pump (34) pumps cleaning medium through the at least one filter mat (32) and the loosely poured filter material (33) into at least one filter cartridge (35).

## Revendications

1. Appareil (V) de nettoyage d'un objet, en particulier d'une bicyclette (Z), dans lequel un boîtier (3) contenant un dispositif de nettoyage (1) est muni d'un côté ouvert (5) au niveau duquel l'objet et le boîtier (3) peuvent être positionnés l'un par rapport à l'autre et à partir duquel le dispositif de nettoyage (1) peut être fourni de manière à agir sur l'objet, dans lequel le dispositif de nettoyage (1) présente un dispositif de commande (4) destiné à la commande du dispositif de nettoyage (1), **caractérisé en ce que** le dispositif de nettoyage (1) présente deux rouleaux de nettoyage (11) de type brosse rotatifs au moyen d'un ou de plusieurs moteur(s) électrique(s),
dans lequel le dispositif de commande (4) est conçu pour faire tourner les rouleaux de nettoyage (11) dans des sens de rotation opposés dans un premier mode de fonctionnement.

2. Appareil (V) selon la revendication 1, **caractérisé en ce que** le dispositif de nettoyage (1) présente, sur le côté ouvert (5) dans une zone intermédiaire entre les deux rouleaux de nettoyage rotatifs, une tête de nettoyage rotative à buses (6) destinée à l'application d'un produit de nettoyage.

3. Appareil (V) selon l'une quelconque des revendications précédentes, **caractérisé en ce que** la région, contenant le dispositif de nettoyage (1), du boîtier (3) présente, le long du bord du côté ouvert (5) de celui-ci et en direction de l'objet, des écrans ou des brosses destiné(e)s à la collecte (12) du produit de nettoyage.

4. Appareil (V) selon l'une quelconque des revendications précédentes, **caractérisé en ce que** le dispositif de commande (4) est conçu de telle manière que, dans le premier mode de fonctionnement, un premier des rouleaux de nettoyage, vu du dessus, tourne dans le sens contraire des aiguilles d'une montre et un second des rouleaux de nettoyage, vu du dessus, tourne dans le sens des aiguilles d'une montre.

5. Appareil (V) selon l'une quelconque des revendications précédentes, **caractérisé en ce que**, dans un second mode de fonctionnement, le dispositif de commande (4) est conçu pour faire tourner les rouleaux de nettoyage (11) respectivement de manière alternée pendant une période de temps de l'ordre de quelques secondes dans le sens des aiguilles d'une montre et dans le sens inverse des aiguilles d'une montre.

6. Appareil (V) selon l'une quelconque des revendications précédentes, **caractérisé en ce que** le dispositif de commande (4) est conçu pour passer du premier mode de fonctionnement au second mode de fonctionnement dès lors que l'objet à nettoyer est pressé contre les rouleaux de nettoyage (11) et qu'ainsi la puissance électromotrice nécessaire s'accroît.

7. Appareil (V) selon l'une quelconque des revendications précédentes, **caractérisé en ce que** le dispositif de commande (4) est conçu pour passer du deuxième mode de fonctionnement au premier mode de fonctionnement dès lors que l'objet à nettoyer est éloigné des rouleaux de nettoyage (11) et qu'ainsi la puissance électromotrice nécessaire décroît.

8. Appareil (V) selon l'une quelconque des revendications précédentes, **caractérisé en ce que** le dispositif de commande (4) est conçu pour mettre hors tension de manière à nouveau commutable les rouleaux de nettoyage (11) et/ou l'appareil lorsqu'une valeur limite de pression contre les rouleaux de nettoyage (11) est dépassée.

9. Appareil (V) selon l'une quelconque des revendications précédentes 2 à 8, **caractérisé en ce qu'**un circuit présentant récipient et filtre et faisant circuler le produit de nettoyage, en particulier de l'eau, est réalisé à l'intérieur du dispositif.

10. Appareil (V) selon l'une quelconque des revendications précédentes, **caractérisé en ce qu'**une région de prélavage (17) est agencée à distance du côté ouvert (5).

11. Appareil (V) selon l'une quelconque des revendications précédentes, **caractérisé en ce que** l'objet à nettoyer est guidé à travers l'appareil (V) dans une coulisse de guidage (8), dans lequel la coulisse de guidage (8) est formée grâce à des galets (14).

12. Appareil (V) selon l'une quelconque des revendications précédentes, **caractérisé en ce qu'**un panneau solaire (16) est agencé au niveau du boîtier (3).

13. Appareil (V) selon l'une quelconque des revendications précédentes, **caractérisé en ce que** le boîtier (3) et le dispositif de nettoyage (1) sont reliés l'un à l'autre de manière amovible.

14. Appareil (V) selon l'une quelconque des revendications précédentes, **caractérisé en ce qu'**une région de filtrage (30) est agencée dans le boîtier (3), dans lequel la région de filtrage comprend au moins un tapis de filtrage (32), ainsi qu'un remplissage en vrac de matériau de filtrage (33) agencé par-dessus dans le sens de la hauteur, dans lequel une pompe (34) pompe du produit de nettoyage dans au moins une cartouche de filtrage (35) à travers le au moins un tapis de filtrage(32) et le remplissage en vrac de matériau de filtrage (33).
